(19) Europäisches Patentamt
European Patent Office
Office européen des brevets

(11) Veröffentlichungsnummer: **0 339 414 B1**

(12) **EUROPÄISCHE PATENTSCHRIFT**

(45) Veröffentlichungstag der Patentschrift: **01.12.93**

(51) Int. Cl.5: **C09K 19/12**, C09K 19/34, C09K 19/20

(21) Anmeldenummer: **89106808.2**

(22) Anmeldetag: **17.04.89**

# (54) Optisch aktive Diester.

(30) Priorität: **27.04.88 CH 1570/88**

(43) Veröffentlichungstag der Anmeldung:
**02.11.89 Patentblatt 89/44**

(45) Bekanntmachung des Hinweises auf die Patenterteilung:
**01.12.93 Patentblatt 93/48**

(84) Benannte Vertragsstaaten:
**CH DE GB IT LI**

(56) Entgegenhaltungen:
**EP-A- 0 309 774**

**Z. PHYS. CHEMIE, Band 252, Nr. 1/2, Februar 1973, Seiten 93-112, Leipzig, DD; D. DEMUS et al.: "Isomorphicbeziehungen zwischen kristallin-flüssigen Phasen"**

(73) Patentinhaber: **F. HOFFMANN-LA ROCHE AG**
**Postfach 3255**
**CH-4002 Basel(CH)**

Patentinhaber: **NIOPIC MOSCOW RESEARCH AND PRODUCTION ASSOCIATION**
**B. Sadovaya 1/4**
**Moskau 103787(SU)**

(72) Erfinder: **Buchecker, Richard Dr**
**10 Felsenstrasse**
**CH-8008 Zürich(CH)**
Erfinder: **Chernova, Nina Ivanova Dr**
**86 Shchelkovskoye Highway Flat 100**
**105523 Moscow(SU)**
Erfinder: **Ivashchenko, Alexander Vasilievich Dr**
**44a Pervomayskaya Street, Flat 57**
**141700 Dolgoprudny, Moscow(SU)**
Erfinder: **Loseva, Marina Vasilievna Dr**
**65 Festivalnaya Street, Flat 214**
**125502 Moscow(SU)**
Erfinder: **Petrashevich, Olga S.Dr**
**1/4B. Sadovaya**
**103787 Moscow(SU)**
Erfinder: **Pozhidaev, Evgeniy Pavlovich**
**21-2 Yablochkov Street, Flat 43**
**127322 Moscow(SU)**
Erfinder: **Rabinovich, Arnold Zinovievich Dr**
**8 Gastello Street, Flat 9**
**107014 Moscow(SU)**

EP 0 339 414 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Erfinder: **Schadt, Martin Dr**
**77 Liestalerstrasse**
**CH-4411 Seltisberg(CH)**

(74) Vertreter: **Lederer, Franz, Dr. et al**
**Lederer, Keller & Riederer,**
**Patentanwälte,**
**Lucile-Grahn-Strasse 22**
**D-81675 München (DE)**

**Beschreibung**

Die vorliegende Erfindung betrifft neue flüssigkristalline Gemische, insbesondere Gemische mit chiral getilteter smektischer Phase, sowie neue optisch aktive Diester und deren Verwendung für elektro-optische Zwecke.

Flüssige Kristalle eignen sich als Dielektrika in Anzeigevorrichtungen, da ihre optischen Eigenschaften durch eine elektrische Spannung beeinflusst werden können. Geeignete elektro-optische Vorrichtungen sind dem Fachmann gut bekannt. Beispiele solcher Vorrichtungen sind Zellen mit dynamischer Streuung, DAP-Zellen (Deformation aufgerichteter Phasen). TN-Zellen (twisted-nematic) und STN-Zellen (super twisted-nematic) mit verdrillt nematischer Struktur, Gast/Wirt-Zellen, Phase-Change-Zellen mit einem cholesterisch-nematischen Phasenübergang und SBE-Zellen (super birefringence effect).

In Appl. Phys. Lett. 36. 899 (1980) und in Recent Developments in Condensed Matter Physics 4, 309 (1981) werden ferner elektro-optische Vorrichtungen auf der Basis von chiral getilteten smektischen Flüssigkristallen vorgeschlagen. Hierbei werden die ferroelektrischen Eigenschaften dieser Materialien ausgenutzt. Als getiltete smektische Phasen, eignen sich beispielsweise smektisch C, F, G, H, I und K Phasen. Bevorzugt sind im allgemeinen smektisch C Phasen welche besonders grosse Ansprechgeschwindigkeiten ermöglichen. Die chiral getilteten Phasen werden üblicherweise mit $S_C^*$ , $S_F^*$ etc. bezeichnet, wobei der Stern die Chiralität angibt.

Ferroelektrische Flüssigkristalle sollten eine gute Stabilität gegenüber chemischen und thermischen Einflüssen und gegenüber elektrischen Feldern aufweisen. Ferner sollten sie eine geeignete Mesophase über einen breiten Temperaturbereich, niedere Viskosität und insbesondere eine ausreichend hohe spontane Polarisation besitzen.

Als ferroelektrische Flüssigkristalle eignen sich vorzugsweise Gemische bestehend aus einem oder mehreren optisch aktiven Dotierstoffen und einem Flüssigkristallmaterial, welches aus einer oder mehreren Komponenten bestehen kann und in der Regel eine getiltete smektische Phase aufweisen sollte. Die optisch aktiven Dotierstoffe müssen nicht selbst smektisch sein, sollten aber im Flüssigkristallmaterial eine chiral getiltete smektische Phase erzeugen und eine hohe spontane Polarisation induzieren. Um eine hohe spontane Polarisation im Gemisch zu erzielen und/oder die Menge an optisch aktivem Dotierstoff relativ niedrig halten zu können, sind Dotierstoffe erwünscht, die bereits in geringen Mengen eine hohe spontane Polarisation zu induzieren vermögen.

Die Erfindung betrifft optisch aktive Verbindungen der allgemeinen Formel

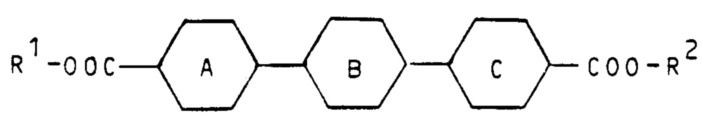

I

worin die Ringe A, B und C unabhängig voneinander unsubstituiertes oder mit Halogen, Cyano, Methyl und/oder Methoxy substituiertes 1,4-Phenylen bedeuten, in welchem gegebenenfalls 1 oder 2 CH-Gruppen durch Stickstoff ersetzt sind; $R^1$ das Radikal eines optisch aktiven Terpenalkohols nach Abspaltung der Hydroxygruppe oder eine Gruppe $-(CH_2)_m-C^*HX^1-R^3$ darstellt; $R^2$ das Radikal eines optisch aktiven Terpenalkohols nach Abspaltung der Hydroxygruppe oder eine Gruppe $-(CH_2)_n-C^*HX^2-R^4$ darstellt; m und n unabhängig voneinander für die Zahl 0 oder 1 stehen; C* ein chirales Kohlenstoffatom bezeichnet; $X^1$ und $X^2$ unabhängig voneinander Fluor, Chlor, Cyano, Methyl oder Methoxy darstellen; $R^3$ und $R^4$ unabhängig voneinander Alkyl, Alkenyl, Phenyl, p-Alkylphenyl, p-Alkoxyphenyl oder p-Alkenyloxyphenyl mit jeweils höchstens 1 bis 15 Kohlenstoffatomen bedeuten, mit der Massgabe, dass $R^3$ von $X^1$ verschieden ist und $R^4$ von $X^2$ verschieden ist; und mit der Massgabe, dass $R^1$ und $R^2$ nicht zugleich 2-Alkyl bezeichnen, wenn die Ringe A, B und C zusammen p-Terphenyl darstellen.

Die erfindungsgemässen Verbindungen induzieren in getilteten smektischen Phasen eine überraschend hohe spontane Polarisation. Sie sind stabil, farblos und in üblichen Flüssigkristallmaterialien erstaunlich gut löslich. Sie besitzen zum Teil selbst flüssigkristalline Eigenschaften; aber auch die nicht flüssigkristallinen Verbindungen der Formel I ergeben in Gemischen in der Regel keine oder nur geringe Klärpunktsdepressionen.

Der Ausdruck "unsubstituiertes oder mit Halogen, Cyano, Methyl und/oder Methoxy substituiertes 1,4-Phenylen, in welchen gegebenenfalls 1 oder 2 CH-Gruppen durch Stickstoff ersetzt sind" umfasst im Rahmen der vorliegenden Erfindung Gruppen wie 1,4-Phenylen, Fluor-1,4-phenylen, Chlor-1,4-phenylen, Cyano-1,4-phenylen, 2,3-Dicyano-1,4-phenylen, Methyl-1,4-phenylen, Methoxy-1,4-phenylen, Pyridin-2,5-diyl, Pyrimidin-2,5-diyl, Pyrazin-2,5-diyl, Pyridazin-3,6-diyl und dergleichen.

Der Ausdruck "Halogen" umfasst Fluor, Chlor, Brom und Jod, vorzugsweise Fluor und Chlor.

Der Ausdruck "Radikal eines optisch aktiven Terpenalkohols nach Abspaltung der Hydroxygruppe" bezeichnet die Gruppe T eines optisch aktiven Terpenalkohols der Formel TOH. Der Ausdruck "Terpenalkohol" ist dem Fachmann geläufig z.B. aus Römpps Chemie-Lexikon, Band 6 (1977), und bezeichnet die von Monoterpenen abgeleiteten Alkohole. Der Ausdruck "Monoterpen" umfasst Terpenkohlenwasserstoffe $C_{10}H_{16}$ und deren Hydrierungs- und Dehydrierungsderivate. Beispiele bevorzugter optisch aktiver Terpenalkohole sind (1R,2S,5R)-(-)-Menthol, (1S,2R,5R)-(+)-Isomenthol, (1S,2S,3S,5R)-(+)-Isopinocampheol, (1S)-(-)-Borneol, (1R)-(-)-Myrtenol, (1S,2S,5R)-(+)-Neomenthol, (-)-Carveol, (+)-Dihydrocarveol, (+)-Terpinen-4-ol, (+)-α-Terpineol und dergleichen.

Die Ausdrücke "Alkyl", und "Alkenyl", umfassen z.B. Methyl, Aethyl, Propyl, Isopropyl, Butyl, Isobutyl, Pentyl, Hexyl, Heptyl, Octyl, Nonyl, Vinyl, 1-Propenyl, 1-Butenyl, 1-Pentenyl, Allyl, 2-Butenyl, 2-Pentenyl, 3-Butenyl, 3-Pentenyl, 4-Pentenyl, 5-Hexenyl, 6-Heptenyl. Bevorzugt sind geradkettiges Alkyl und Isoalkyl. Vorzugsweise besitzen diese Gruppen 1-15, insbesondere 1-9 Kohlenstoffatome.

Die Ausdrücke "p-Alkylphenyl", "p-Alkoxyphenyl" oder "p-Alkenyloxyphenyl" umfassen Gruppen wie beispielsweise, p-Tolyl, 4-Methoxyphenyl, 4-Aethylphenyl, 4-Aethoxyphenyl, 4-Allyloxyphenyl und dergleichen. Die genannten Phenylreste besitzen insgesamt vorzugsweise 7-15, insbesondere 7-9 Kohlenstoffatome.

Die Gruppen $R^3$ und $R^4$ können gleiche oder verschiedene Bedeutungen haben.

Die obige Formel I umfasst insbesondere die optisch aktiven Verbindungen der allgemeinen Formeln

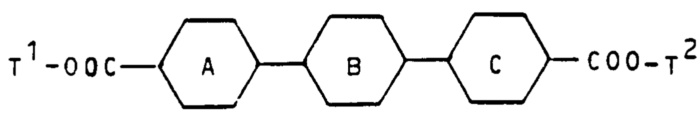

Ia

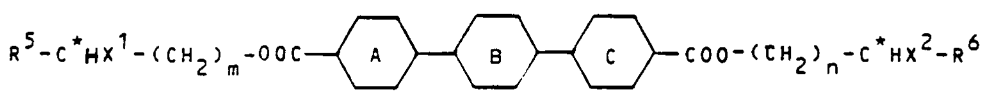

Ib

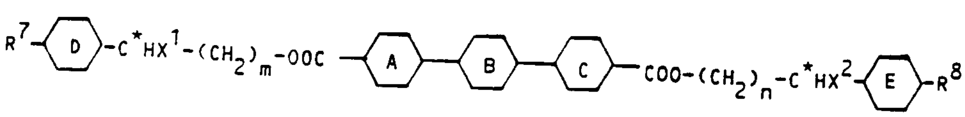

Ic

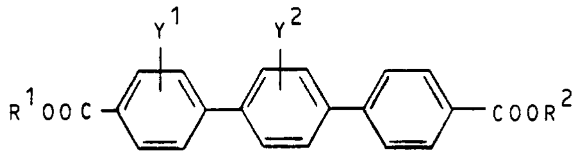

Id

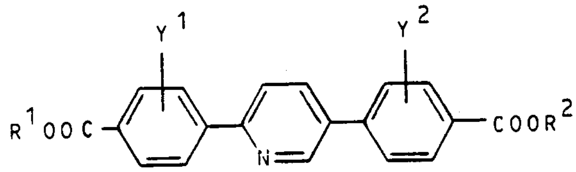

Ie

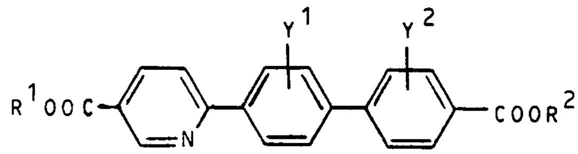

If

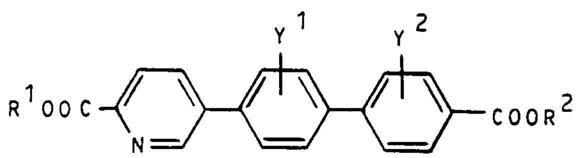

Ig

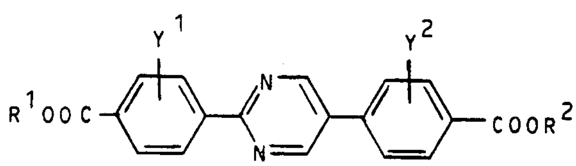

Ih

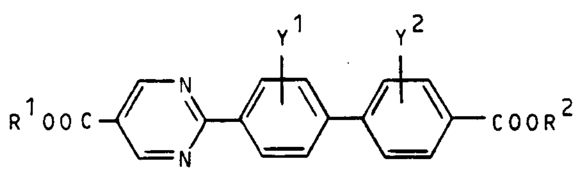

Ii

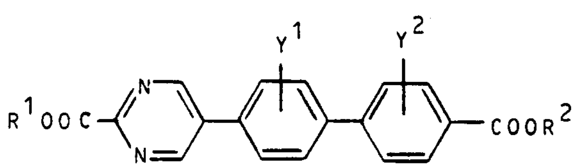

Ij

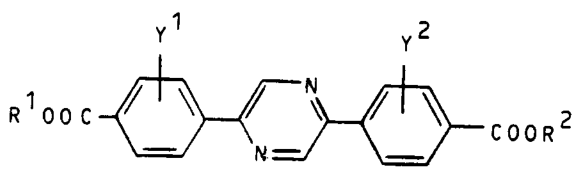

Ik

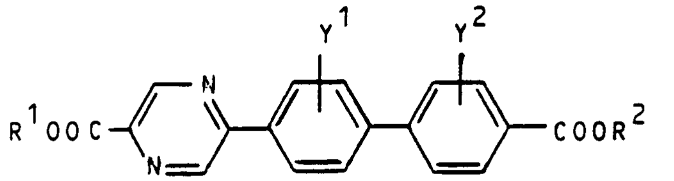 Il

worin $R^1$, $R^2$, $X^1$, $X^2$, m, n, C* und die Ringe A, B und C die obigen Bedeutungen haben; $T^1$ und $T^2$ unabhängig voneinander das Radikal eines optisch aktiven Terpenalkohols nach Abspaltung der Hydroxygruppe bezeichnen; $R^5$ und $R^6$ unabhängig voneinander Alkyl oder Alkenyl, mit jeweils höchstens 1 bis 15 Kohlenstoffatomen bedeuten; mit der Massgabe, dass $R^5$ von $X^1$ verschieden ist und $R^6$ von $X^2$ verschieden ist, und mit der weiteren Massgabe, dass Formel Ib nicht 4,4"-Bis(2-alkyloxycarbonyl)-p-terphenyl bedeutet; die Ringe D und E unabhängig voneinander 1,4-Phenylen, Methyl-1,4-phenylen oder Methoxy-1,4-phenylen bezeichnen; $R^7$ und $R^8$ unabhängig voneinander Wasserstoff oder Alkyl oder Alkenyl, mit jeweils höchstens 1 bis 15 Kohlenstoffatomen bedeuten; $Y^1$ und $Y^2$ unabhängig voneinander Wasserstoff, Halogen, Cyano, Methyl oder Methoxy bezeichnen, mit der Massgabe, dass in Formel Id $Y^1$ und/oder $Y^2$ von Wasserstoff verschieden ist, wenn $R^1$ und $R^2$ beide 2-Alkyl bedeuten.

In den obigen Formeln I, Ia, Ib und Ic stehen vorzugsweise die Ringe A, B und C für 1,4-Phenylen oder einer oder zwei der Ringe auch für Fluor-1,4-phenylen. Chlor-1,4-phenylen, Cyano-1,4-phenylen, 2,3-Dicyano-1,4-phenylen, Methyl-1,4-phenylen, Methoxy-1,4-phenylen, Pyridin-2,5-diyl, Pyrimidin-2,5-diyl und/oder Pyrazin-2,5-diyl. Besonders bevorzugt sind im allgemeinen diejenigen, worin die Ringe A, B und C für unsubstituiertes oder mit Halogen. Cyano, Methyl und/oder Methoxy substituiertes 1,4-Phenylen stehen, oder einer der Ringe A, B und C auch für Pyrimidin-2,5-diyl steht. Vorzugsweise sind die Phenylen-Gruppen unsubstituiert oder höchstens eine der Gruppen substituiert.

Von den Verbindungen der Formeln Id-Il sind im allgemeinen diejenigen bevorzugt, worin einer der Substituenten $Y^1$ und $Y^2$ oder beide Substituenten $Y^1$ und $Y^2$ Wasserstoff bedeuten. Verbindungen der Formeln Id, Ih, Ii und Ij sind im allgemeinen bevorzugt.

Bevorzugte Verbindungen der obigen Formeln I und Ib-Il sind diejenigen, worin m für die Zahl 0 und $X^1$ für Cyano, Methyl oder Methoxy stehen oder m für die Zahl 1 und $X^1$ für Fluor, Chlor, Cyano, Methyl oder Methoxy stehen. Ferner steht in den obigen Formel I und Ib-Il vorzugsweise n für die Zahl 0 und $X^2$ für Cyano, Methyl oder Methoxy, oder n steht vorzugsweise für die Zahl 1 und $X^2$ für Fluor, Chlor, Cyano, Methyl oder Methoxy.

Bevorzugte Bedeutungen von $X^1$ und $X^2$ sind Chlor, Cyano und Methyl.

$R^5$ und $R^6$ besitzen vorzugsweise 1-15 und besonders bevorzugt 2-9 Kohlenstoffatome. Bevorzugte Reste $R^5$ und $R^6$ sind Alkyl und Alkenyl. Besonders bevorzugte Reste $R^5$ und $R^6$ sind n-Alkyl und Isoalkyl.

$R^7$ und $R^8$ besitzen vorzugsweise 1-9, besonders bevorzugt 1-3 Kohlenstoffatome. Bevorzugte Reste $R^7$ und $R^8$ sind Alkyl, insbesondere Methyl.

Die Ringe D und E bezeichnen vorzugsweise 1,4-Phenylen.

Dementsprechend können $R^3$ bzw. $R^4$ in den obigen Formeln vorzugsweise Alkyl, Alkenyl, Phenyl, p-Alkylphenyl, p-Alkoxyphenyl oder p-Alkenyloxyphenyl mit jeweils höchstens 15 Kohlenstoffatomen, besonders bevorzugt höchstens 9 Kohlenstoffatomen bedeuten. Beispiele besonders bevorzugter Reste $R^3$ bzw. $R^4$ sind n-Alkyl, Isoalkyl, Phenyl, p-Methylphenyl, p-Methoxyphenyl und dergleichen.

Bevorzugte Reste $R^1$ und $R^2$ ergeben sich aus den obigen Angaben. Besonders bevorzugte Reste $R^1$ und $R^2$ sind die Gruppen $-C^*H(CH_3)-R^3$ und $-CH_2-C^*HX^1-R^3$ bzw. $C^*H(CH_3)-R^4$ und $-CH_2-CHX^2-R^4$ worin $R^3$ und $R^4$ die oben genannten bevorzugten Bedeutungen haben und $X^1$ und $X^2$ Fluor, Chlor, Cyano, Methyl oder Methoxy, vorzugsweise Chlor oder Cyano bedeuten. Ferner kann $R^1$ und/oder $R^2$ vorzugsweise auch das Radikal ($T^1$ bzw. $T^2$) eines optisch aktiven Terpenalkohols, wie Menthol, Isomenthol, Isopinocampheol, Borneol, Myrtenol, Neomenthol, Carveol, Dihydrocarveol, Terpinen-4-ol oder $\alpha$-Terpineol, nach Abspaltung der Hydroxygruppe bedeuten. Beispiele besonders bevorzugter Reste $R^1$ und $R^2$ sind Menthyl, 2-Alkyl, 2-Methylalkyl, 2-Chloralkyl, 2-Cyanoalkyl, 1-Phenyläthyl und dergleichen.

Die Konfiguration an den Chiralitätszentren der Verbindungen der Formel I ist vorzugsweise so, dass die beiden chiralen Gruppen im Flüssigkristallgemisch eine gleichsinnige spontane Polarisation induzieren. Der Einfluss auf die Helixverdrillung kann gleichsinnig oder entgegengesetzt sein.

Die Reste $R^1$ und $R^2$ in den obigen Formeln I und Id-Il können verschieden oder vorzugsweise gleich sein. Wenn die Reste $R^1$ und $R^2$ die gleichen Gruppen und Bindungen aufweisen, d.h. abgesehen von der Konfiguration gleiche Bedeutung besitzen, so sollten sie vorzugsweise nicht Spiegelbilder zueinander sein, sondern vorzugsweise die gleiche Konfiguration aufweisen. Dies gilt insbesondere, wenn das Ringsystem

bestehend aus den Ringen A, B und C eine Symmetrieebene senkrecht zur Moleküllängsachse aufweist.

Analog können die Flügelgruppen in den Formeln Ib und Ic vorzugsweise gleiche Bedeutung haben, d.h. m kann die Bedeutung von n, $X^1$ die Bedeutung von $X^2$, $R^5$ die Bedeutung von $R^6$, Ring D die Bedeutung von Ring E und $R^7$ die Bedeutung von $R^8$ haben, und die Konfiguration an den chiralen Kohlenstoffatomen ist in diesem Fall vorzugsweise gleich.

Die Herstellung der Verbindungen der Formel I und der Ausgangsmaterialien kann in an sich bekannter Weise nach den in Standardwerken (z.B. Houben-Weyl, Methoden der Organischen Chemie, Georg Thieme Verlag, Stuttgart) beschriebenen Methoden erfolgen. Vorzugsweise erfolgt die Herstellung durch Veresterung der Dicarbonsäuren der allgemeinen Formel

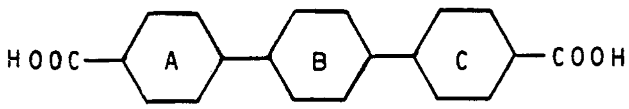

II

worin die Ringe A, B und C die obigen Bedeutungen haben, oder geeigneter Derivate (z.B. Säurechloride) dieser Dicarbonsäuren mit dem Alkohol $R^1OH$ (wenn $R^1$ und $R^2$ gleiche Bedeutung haben) bzw. mit den Alkoholen $R^1OH$ und $R^2OH$. Wenn $R^1$ und $R^2$ verschiedene Bedeutungen haben, kann die Veresterung stufenweise erfolgen. Gewünschtenfalls kann die Veresterung auch in einer Stufe erfolgen und das erhaltene Gemisch von Verbindungen der Formel I als solches verwendet oder nach üblichen Methoden (z.B. chromatographische Trennung, Umkristallisation) getrennt werden.

Die Dicarbonsäuren der Formel II sind bekannte Verbindungen oder können in analoger Weise zu bekannten Verbindungen hergestellt werden. Beispielsweise können sie durch Hydrolyse aus entsprechenden Verbindungen erhalten werden, welche anstelle der Carboxygruppen geeignete Funktionen, z.B. Cyano-, Amid- und/oder Estergruppen, aufweisen. Geeignete Verbindungen sind beispielsweise aus D. Demus et al., Flüssige Kristalle in Tabellen, VEB Deutscher Verlag für Grundstoffindustrie, Leipzig und den dort erwähnten Literaturstellen bekannt. Ferner können sie in analoger Weise zu bekannten Methoden zur Herstellung von Flüssigkritallen [z.B. DE-A-2641724, Z. Naturforschung 33b, 433 (1978), Z. Chemie 17, 63 (1977) Mol. Cryst. Liq. Cryst. 42, 1225 (1977)] erhalten werden, wenn anstelle der üblicherweise verwendeten Alkyl- oder Alkoxyflügelgruppen z.B. entsprechende Verbindungen mit Cyano-, Amid- oder Methoxycarbonyl-Flügelgruppen verwendet werden.

Weiterhin können die Dicarbonsäuren der Formel II aus den Verbindungen der allgemeinen Formel

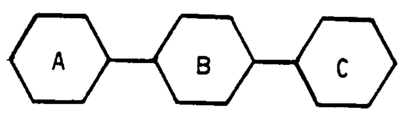

III

worin die Ringe A, B und C die obigen Bedeutungen haben, erhalten werden, z.B. durch Friedel-Crafts-Reaktion mit Acetylchlorid in Gegenwart von Aluminiumtrichlorid und anschliessenden Haloform-Abbau mit Natriumhypobromit oder durch Friedel-Crafts-Reaktion mit Oxalylchlorid in Gegenwart von Aluminiumtrichlorid und gewünschtenfalls Hydrolyse des erhaltenen Dicarbonsäurechlorids.

Die Verbindungen der Formel I können als chirale Dotierstoffe in flüssigkristallinen Gemischen verwendet werden. Die Erfindung betrifft daher ebenfalls ein flüssigkristallines Gemisch mit mindestens 2 Komponenten, welches dadurch gekennzeichnet ist, dass mindestens eine Komponente eine optisch aktive Verbindung der Formel I ist. Zweckmässigerweise enthält das Gemisch ein Flüssigkristallmaterial mit nematischer, cholesterischer oder smektischer Phase und eine oder mehrere optisch aktive Verbindungen der Formel I.

Bevorzugt sind Gemische mit chiral getilteter smektischer Phase, insbesondere solche mit einer $S_C^*$ -Phase. Diese Gemische enthalten vorzugsweise ein Flüssigkristallmaterial mit getilteter smektischer Phase (insbesondere mit einer smektisch C Phase) und eine oder mehrere optisch aktive Verbindungen der Formel I.

Der Anteil an Verbindungen der Formel I in den erfindungsgemässen Gemischen kann in breiten Grenzen variieren und beispielsweise etwa 0,5-40 Gew.-% betragen. Bevorzugt ist im allgemeinen ein Bereich von etwa 1-20 Gew.-% und besondere bevorzugt ein Bereich von etwa 3-10 Gew.-%.

Als weitere Komponenten kommen übliche Flüssigkristallmaterialien in Betracht. Vorzugsweise enthalten die erfindungsgemässen Gemische neben einer oder mehreren Verbindungen der Formel I eine oder mehrere der Verbindungen der folgenden allgemeinen Formeln

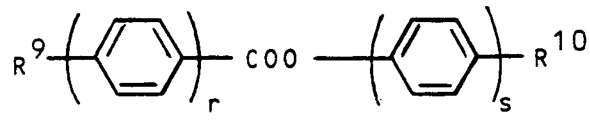

IV

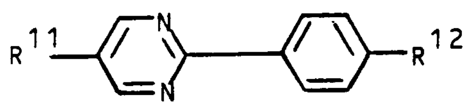

V

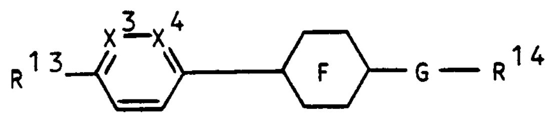

VI

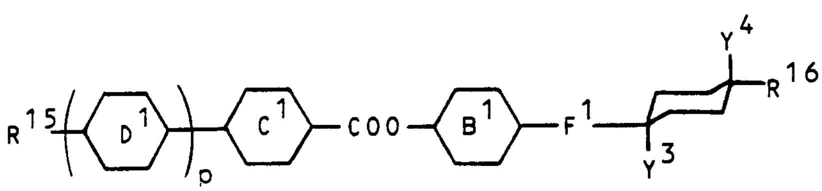

VII

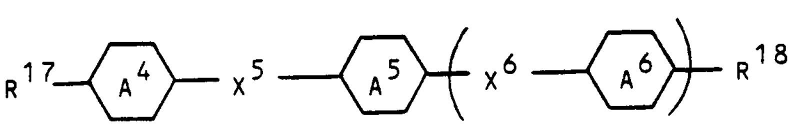

VIII

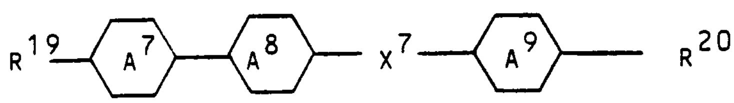

IX

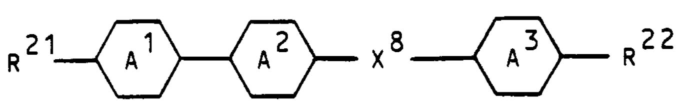

X

worin $R^9$ und $R^{10}$ Alkyl, Alkoxy, Alkanoyl, Alkanoyloxy, Alkoxycarbonyl oder Alkoxycarbonyloxy mit bis zu 18 Kohlenstoffatomen bedeuten; r und s unabhängig voneinander 1 oder 2 bedeuten; $R^{11}$ und $R^{12}$ Alkyl oder Alkoxy mit 1-18 Kohlenstoffatomen darstellen; $X^3$ für CH und $X^4$ für N steht oder $X^3$ für N und $X^4$ für CH steht; G eine einfache Kovalenzbindung, trans-1,4-Cyclohexylen, cis-4-Cyano-trans-1,4-cyclohexylen oder gegebenenfalls mit Halogen oder Methyl substituiertes 1,4-Phenylen bedeutet; Ring F trans-1,4-Cyclohexylen, gegebenenfalls mit Halogen oder Methyl substituiertes 1,4-Phenylen oder, wenn G eine einfache Kovalenzbindung bedeutet, auch cis-4-Cyano-trans-1,4-cyclohexylen darstellt; $R^{13}$ und $R^{14}$, je eine gegebenenfalls halogensubstituierte Alkyl- oder Alkenylgruppe bezeichnen, in welcher gegebenenfalls eine oder zwei nicht benachbarte $CH_2$-Gruppen durch -O-, -COO- und/oder -OOC- ersetzt sind; p für die Zahl 0 oder 1 steht; $E^1$ eine einfache Kovalenzbindung, $-CH_2-CH_2-$, $-OCH_2-$, -COO- oder -OOC- bedeutet; die Ringe $B^1$, $C^1$ und $D^1$ gegebenenfalls mit Cyano, Halogen oder Niederalkyl substituiertes 1,4-Phenylen bezeichnen; $Y^3$ und $Y^4$ Wasserstoff bedeuten oder einer der Substituenten $Y^3$ und $Y^4$ auch Cyano bedeutet; $R^{15}$ und $R^{16}$ unabhängig voneinander gegebenenfalls halogensubstituiertes $C_1$-$C_{18}$-Alkyl oder gegebenenfalls halogensubstituiertes $C_2$-$C_{18}$-Alkenyl darstellen, in welchen gegebenenfalls eine oder zwei nicht benachbarte $CH_2$-Gruppen durch Sauerstoff ersetzt sind; $X^5$ eine einfache Kovalenzbindung, -COO- oder -OOC- und $X^5$ eine einfache Kovalenzbindung, -COO-, -OOC-, $-CH_2CH_2-$, $-OCH_2$-oder $-CH_2O-$ darstellen; die Ringe $A^4$, $A^5$ und $A^6$ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn p für die Zahl 1 steht, einer der Ringe auch trans-1,4-Cyclohexylen oder trans-m-Dioxan-2,5-diyl bedeutet; $R^{17}$ eine gegebenenfalls halogensubstituierte Alkenylgruppe mit bis zu 18 Kohlenstoffatomen bedeutet, worin gegebenenfalls 1 oder 2 nicht benachbarte $CH_2$-Gruppen durch -O-, -CO-, -COO- oder -OOC- ersetzt sind und/oder gegebenenfalls eine C-C-Einfachbindung durch eine C-C-Doppelbindung ersetzt ist; $R^{18}$ eine gegebenenfalls halogensubstituierte Alkylgruppe mit bis zu 18 Kohlenstoffatomen bedeutet, worin gegebenenfalls 1 oder 2 nicht benachbarte $CH_2$-Gruppen durch -O-, -CO-, -COO-oder -OOC- ersetzt sind und/oder gegebenenfalls eine C-C-Einfachbindung durch eine C-C-Doppelbindung ersetzt ist; $X^7$ eine einfache Kovalenzbindung, -COO-, -OOC-, $-CH_2CH_2-$, $-OCH_2-$ oder $-CH_2O-$ bezeichnet; einer der Ringe $A^7$, $A^8$ und $A^9$ Pyrimidin-2,5-diyl darstellt, einer der Ringe $A^7$, $A^8$ und $A^9$ unsubstituiertes oder mit Cyano, Halogen oder Niederalkyl substituiertes 1,4-Phenylen darstellt und einer der Ringe $A^7$, $A^8$ und $A^9$ trans-1,4-Cyclohexylen oder unsubstituiertes oder mit Cyano, Halogen oder Niederalkyl substituiertes 1,4-Phenylen darstellt; und $R^{19}$ und $R^{20}$ unabhängig voneinander eine gegebenenfalls halogensubstituierte Alkylgruppe mit bis zu 18 Kohlenstoffatomen bedeuten, worin gegebenenfalls 1 oder 2 nicht benachbarte $CH_2$-Gruppen durch -O-, -CO-, -COO- und/oder -OOC- ersetzt sind; $X^5$ eine einfache Kovalenzbindung, -COO-, -OOC-, $-CH_2CH_2-$, $-OCH_2-$ oder $-CH_2O-$ bezeichnet; einer der Ringe $A^1$, $A^2$ und $A^3$ trans-m-Dioxan-2,5-diyl darstellt, und die beiden andern der Ringe $A^1$, $A^2$ und $A^3$ unabhängig voneinander unsubstituiertes oder mit Cyano, Halogen oder Niederalkyl substituiertes 1,4-Phenylen darstellen; $R^{21}$ und $R^{22}$ unabhängig voneinander eine gegebenenfalls halogensubstituierte Alkylgruppe mit bis zu 18 Kohlenstoffatomen bedeuten, worin gegebenenfalls 1 oder 2 nicht benachbarte $CH_2$-Gruppen durch -O-, -CO-, COO- und/oder -OOC- ersetzt sind.

Die Herstellung der flüssigkristallinen Gemische und der elektro-optischen Vorrichtungen kann in an sich bekannter Weise erfolgen.

Die Erfindung wird durch die folgenden Beispiele weiter veranschaulicht. Optische Antipoden besitzen jeweils die gleichen Phasenumwandlungstemperaturen und induzieren absolut gleiche Werte der spontanen Polarisation und der Verdrillung aber mit entgegengesetzten Vorzeichen. Die zur Charakterisierung der Phasenumwandlungen verwendeten Abklärungen stehen für folgende Bedeutungen:

| | |
|---|---|
| C | für kristallin |
| S | für smektisch |
| $S_A$, $S_B$ etc. | für smektisch A, B etc. |
| $S_C^*$, $S_F^*$ | für chiral smektisch C, F etc. |
| Ch | für cholesterisch |
| N | für nematisch |
| I | für isotrop. |

Beispiel 1

Eine Lösung von 2 g 4,4″-p-Terphenyldicarbonsäuredichlorid (herstellbar durch Umsetzung von 4,4″-Terphenyldicarbonsäure mit Thionylchlorid in Pyridin bei 80 °C) in 200 ml trockenem Pyridin wurde mit 2,16 g L-(-)-Menthol [1(R),2(S),5(R)-Menthol] versetzt und 24 Stunden bei 20 °C gerührt. Anschliessend wurde das Reaktionsgemisch auf ein Gemisch von Eis und verdünnter Salzsäure gegossen. Das kristalline Produkt

wurde abfiltriert, mit Wasser gewaschen und am Hochvakuum getrocknet. Chromatographische Reinigung und Umkristallisation ergab reines 4,4″-Di-[1(R),2(S),5(R)-menthyloxycarbonyl]-p-terphenyl mit Smp. 168-169 °C.

In analoger Weise können folgende Verbindungen hergestellt werden:

4,4″-Di-[1(S)-phenyl-1-äthoxycarbonyl]-p-terphenyl, Smp. 166,5-167,5 °C;
4,4″-Di-[1(S)-(p-methylphenyl)-1-äthoxycarbonyl]-p-terphenyl;
4,4″-Di-[1(S)-(p-methoxyphenyl)-1-äthoxycarbonyl]-p-terphenyl;
4,4″-Di-[2(S)-methyl-1-butyloxycarbonyl]-p-terphenyl, Smp. (C-$S_A$) 132 °C, ($S_A$-Ch) 143 °C, Klp. (Ch-I) 145 °C;
4,4″-Di-[2(S)-methyl-1-pentyloxycarbonyl]-p-terphenyl;
4,4″-Di-[2(S)-methyl-1-hexyloxycarbonyl]-p-terphenyl;
4,4″-Di-[2(S)-fluor-1-propyloxycarbonyl]-p-terphenyl;
4,4″-Di-[2(S)-chlor-1-propyloxycarbonyl]-p-terphenyl, Smp. (C-$S_A$) 123 °C, ($S_A$-Ch) 135 °C, Klp. (Ch-I) 138 °C;
4,4″-Di-[2(R)-cyano-1-propyloxycarbonyl]-p-terphenyl, Smp. 179,2 °C;
4,4″-Di-[2(S)-fluor-1-butyloxycarbonyl]-p-terphenyl;
4,4″-Di-[2(S)-chlor-1-butyloxycarbonyl]-p-terphenyl;
4,4″-Di-[2(R)-cyano-1-butyloxycarbonyl]-p-terphenyl;
4,4″-Di-[2(S)-fluor-3-methyl-1-butyloxycarbonyl]-p-terphenyl;
4,4″-Di-[2(S)-chlor-3-methyl-1-butyloxycarbonyl]-p-terphenyl;
4,4″-Di-[2(R)-cyano-3-methyl-1-butyloxycarbonyl]-p-terphenyl;
4,4″-Di-[2(S)-fluor-1-pentyloxycarbonyl]-p-terphenyl;
4,4″-Di-[2(S)-chlor-1-pentyloxycarbonyl]-p-terphenyl, Smp. (C-$S_C^*$) 106 °C, ($S_C^*$-$S_A$) 110,2 °C. ($S_A$-Ch) 140 °C, Klp. (Ch-I) 141 °C;
4,4″-Di-[2(R)-cyano-1-pentyloxycarbonyl]-p-terphenyl, Smp. 129-131 °C;
4,4″-Di-[2(R)-fluor-4-methyl-1-pentyloxycarbonyl]-p-terphenyl;
4,4″-Di-[2(R)-chlor-4-methyl-1-pentyloxycarbonyl]-p-terphenyl, Smp. 169,4-170,0 °C;
4,4″-Di-[2(S)-cyano-4-methyl-1-pentyloxycarbonyl]-p-terphenyl, Smp. 129-131 °C;
4,4″-Di-[2(R)-fluor-1-hexyloxycarbonyl]-p-terphenyl;
4,4″-Di-[2(S)-chlor-1-hexyloxycarbonyl]-p-terphenyl;
4,4″-Di-[2(R)-cyano-1-hexyloxycarbonyl]-p-terphenyl;
4-[2(S)-Octyloxycarbonyl]-4″-[1(S)-phenyl-1-äthoxycarbonyl]-p-terphenyl;
4-[2(R)-Octyloxycarbonyl]-4″-[1(S)-phenyl-1-äthoxycarbonyl]-p-terphenyl;
4-[2(S)-Octyloxycarbonyl]-4″-[2(S)-chlor-1-pentyloxycarbonyl]-p-terphenyl;
4-[2(R)-Octyloxycarbonyl]-4″-[2(S)-chlor-1-pentyloxycarbonyl]-p-terphenyl;
4-[2(S)-Octyloxycarbonyl]-4″-[2(R)-cyano-1-pentyloxycarbonyl]-p-terphenyl;
4-[2(R)-Octyloxycarbonyl]-4″-[2(R)-cyano-1-pentyloxycarbonyl]-p-terphenyl;
4-[2(S)-Octyloxycarbonyl]-4″-[2(R)-chlor-4-methyl-1-pentyloxycarbonyl]-p-terphenyl;
4-[2(R)-Octyloxycarbonyl]-4″-[2(R)-chlor-4-methyl-1-pentyloxycarbonyl]-p-terphenyl;
4-[2(S)-Octyloxycarbonyl]-4″-[2(S)-cyano-4-methyl-1-pentyloxycarbonyl]-p-terphenyl;
4-[2(R)-Octyloxycarbonyl]-4″-[2(S)-cyano-4-methyl-1-pentyloxycarbonyl]-p-terphenyl;
2,5-Bis-[4-[2(S)-octyloxycarbonyl]phenyl]pyrimidin;
2,5-Bis-[4-[1(R),2(S),5(R)-menthyloxycarbonyl]phenyl]pyrimidin;
2,5-Bis-[4-[1(S)-phenyl-1-äthoxycarbonyl]phenyl]pyrimidin;
2,5-Bis-[4-[2(S)-methyl-1-butyloxycarbonyl]phenyl]pyrimidin;
2,5-Bis-[4-[2(S)-chlor-1-propyloxycarbonyl]phenyl]pyrimidin;
2,5-Bis-[4-[2(R)-cyano-1-propyloxycarbonyl]phenyl]pyrimidin;
2,5-Bis-[4-[2(S)-chlor-1-pentyloxycarbonyl]phenyl]pyrimidin;
2,5-Bis-[4-[2(R)-cyano-1-pentyloxycarbonyl]phenyl]pyrimidin;
2,5-Bis-[4-[2(R)-chlor-4-methyl-1-pentyloxycarbonyl]phenyl]pyrimidin;
2,5-Bis-[4-[2(S)-cyano-4-methyl-1-pentyloxycarbonyl]phenyl]pyrimidin;

und die optischen Antipoden der genannten Verbindungen.

Die als Ausgangsmaterialien verwendeten Alkohole sind bekannte oder Analoge bekannter Verbindungen oder können nach folgenden Methoden hergestellt werden:

1-Phenyläthanol wurde mit Phthalsäureanhydrid zum racemischen Monoester umgesetzt. Die Racematspaltung erfolgte durch Salzbildung mit (-)-1-Phenyläthylamin und fraktionierte Kristallisation. Hydrolyse der optisch aktiven Monoester mit verdünnter Kalilauge ergab S-(+)-1-Phenyläthanol und R-(-)-1-Phenyläthanol. In analoger Weise können Derivate mit substituiertem Phenylrest erhalten werden.

L-Alanin wurde durch Diazotierung mit Natriumnitrit in 6N Salzsäure und anschliessende Extraktion mit Methylenchlorid in S-2-Chlorpropionsäure übergeführt. Reduktion der erhaltenen Säure mit Lithiumaluminiumhydrid in trockenem Diäthyläther ergab S-(+)-2-Chlor-1-propanol mit $\alpha_D$ = +19,3°. Eine analoge Umsetzung von L-Norvalin ergab S-(-)-2-Chlor-1-pentanol mit $\alpha_D$ = -32.5°. Eine analoge Umsetzung von D-Leucin ergab R-(+)-2-Chlor-4-methyl-1-pentanol mit $\alpha_D$ = +43,2°.

Eine Lösung von S-(+)-2-Chlor-1-propanol in Dimethylformamid wurde mit Kaliumcyanid versetzt und unter Rühren 70 Stunden auf 70-75°C erwärmt. Hierbei wurde R-(-)-2-Cyano-1-propanolmit $\alpha_D$ = -1,3° erhalten. Eine analoge Umsetzung von S-(-)-2-Chlor-1-pentanol ergab R-(+)-2-Cyano-1-Pentanol mit $\alpha_D$ = +10,3°. Eine analoge Umsetzung von R-(+)-2-Chlor-4-methyl-1-pentanol ergab S-(-)-2-Cyano-4-methyl-1-pentanol mit $\alpha_D$ = -11,5°.

Beispiel 2

a) Eine Suspension von 37,2 g Methoxymethyl-triphenylphosphoniumchlorid in 250 ml t-Butylmethyläther wird bei Raumtemperatur unter Argonbegasung mit 13,4 g Kalium-t-butylat versetzt und 1 Stunde gerührt. Anschliessend wird das Reaktionsgemisch bei ca. 20°C mit einem Gemisch von 9,49 g 4-Cyanobenzaldehyd und 100 ml t-Butylmethyläther versetzt und noch 1 Stunde gerührt. Danach wird das Reaktionsgemisch in Diäthyläther/Wasser verteilt. Die wässrige Phase wird noch mehrmals mit Diäthyläther extrahiert. Die organischen Phasen werden mit Wasser gewaschen, über Magnesiumsulfat getrocknet, filtriert und eingedampft. Chromatographische Reinigung des erhaltenen Rohproduktes an Kieselgel mit Petroläther und Toluol/Hexan (Vol. 3:1) ergibt 4-(2-Methoxyvinyl)benzonitril.

b) 15 ml Orthoameisensäuretrimethylester werden bei 0°C unter Argonbegasung mit 187 µl Bortrifluorid-diäthylätherat und dann innert 10 Minuten bei ca. 9°C mit einer Lösung von 2,7 g 4-(2-Methoxyvinyl)-benzonitril in 30 ml Orthoameisensäuretrimethylester versetzt. Die Reaktionslösung wird etwa 60 Stunden bei Raumtemperatur gerührt, dann mit 100 µl Triäthylamin versetzt und eingedampft. Das erhaltene Rohprodukt wird in Diäthyläther und wässriger Natriumhydrogencarbonat-Lösung verteilt. Die wässrige Phase wird noch mehrmals mit Diäthyläther extrahiert. Die organischen Phasen werden mit wässriger Natriumhydrogencarbonat-Lösung und mit Wasser gewaschen, über Magnesiumsulfat getrocknet, filtriert und eingedampft. Chromatographische Reinigung des Rückstandes an Kieselgel mit Aethylacetat/Petroläther ergibt 2-(4-Cyanophenyl)malondialdehyd-tetramethylacetal.

c) Eine Lösung von 3,9 g 2-(4-Cyanophenyl)malondialdehyd-tetramethylacetal in 50 ml Acetonitril wird unter Argonbegasung mit 81,5 mg p-Toluolsulfonsäure-Monohydrat und 241 µl Wasser versetzt und 2 Stunden zum Rückfluss erhitzt. Anschliessend wird das Reaktionsgemisch in Diäthyläther und wässriger Natriumhydrogencarbonat Lösung verteilt. Die wässrige Phase wird noch mehrmals mit Diäthyläther extrahiert. Die organischen Phasen werden mit wässriger Natriumhydrogencarbonat-Lösung gewaschen, über Magnesiumsulfat getrocknet, filtriert und eingedampft. Chromatographische Reinigung des erhaltenen Rohproduktes an Kieselgel mit Aethylacetat/Petroläther ergibt 2-(4-Cyanophenyl)-3-methoxyacrolein.

d) 247 mg Natrium werden bei Raumtemperatur mit 10 ml Methanol versetzt. Nach 15 Minuten wird die erhaltene Lösung bei Raumtemperatur mit 1,58 g 4-Amidinobenzamid-hydrochlorid versetzt. Hierbei bildet sich eine weisse Suspension, die bei Raumtemperatur innert 10 Minuten tropfenweise mit einer Lösung von 1,42 g 2-(4-Cyanophenyl)-3-methoxyacrolein in 50 ml Methanol versetzt wird. Das Reaktionsgemisch wird noch 2 Stunden bei Raumtemperatur gerührt und dann genutscht. Der Rückstand wird mit Wasser, Tetrahydrofuran und Diäthyläther gewaschen und am Hochvakuum getrocknet. Hierbei wird 4-[5-(4-Cyanophenyl)-2-pyrimidinyl]benzamid erhalten.

e) 1,8 g 4-[5-(4-Cyanophenyl)-2-pyrimidinyl]benzamid werden in 30 ml Eisessig und 40 ml 50-prozentiger Schwefelsäure suspendiert und das Gemisch 3 Stunden erhitzt (Badtemperatur 160°C). Danach wird das abgekühlte Reaktionsgemisch auf 200 ml Wasser gegossen und genutscht. Der Rückstand wird mit Wasser gewaschen und am Hochvakuum getrocknet. Hierbei wird Pyrimidin-2,5-ylen-bis(4-benzoesäure) erhalten.

f) Ein Gemisch von 80 mg Pyrimidin-2,5-ylen-bis(4-benzoesäure) und 10 ml Pyridin wird mit 80 µl Thionylchlorid versetzt und 20 Stunden auf 80°C erhitzt. Anschliessend wird das abgekühlte Reaktionsgemisch mit 0,5 ml R-(-)-2-Octanol versetzt und unter Rühren innert 20 Stunden langsam bis auf 100°C erhitzt. Danach wird das Reaktionsgemisch abgekühlt und in Diäthyläther und Wasser verteilt. Die wässrige Phase wird abgetrennt und mit Diäthyläther nachextrahiert. Die organischen Phasen werden mit 2N Salzsäure und mit Wasser gewaschen, über Magnesiumsulfat getrocknet, filtriert und eingedampft. Chromatograhische Reinigung des Rückstandes an Kieselgel mit Aethylacetat/Petroläther ergibt 2,5-Bis-[4-(2(R)-Octyloxycarbonyl)phenyl]pyrimidin.

In analoger Weise können folgende Verbindungen hergestellt werden:

2,5-Bis-[4-(1(R),2(S),5(R)-menthyloxycarbonyl)phenyl]pyrimidin;
2,5-Bis-[4-(1(S)-phenyl-1-äthoxycarbonyl)phenyl]pyrimidin;
2,5-Bis-[4-(2(S)-methyl-1-butyloxycarbonyl)phenyl]pyrimidin;
2,5-Bis-[4-(2(S)-chlor-1-propyloxycarbonyl)phenyl]pyrimidin;
2,5-Bis-[4-(2(R)-cyano-1-propyloxycarbonyl)phenyl]pyrimidin;
2,5-Bis-[4-(2(S)-chlor-1-pentyloxycarbonyl)phenyl]pyrimidin;
2,5-Bis-[4-(2(R)-cyano-1-pentyloxycarbonyl)phenyl]pyrimidin;
2,5-Bis-[4-(2(R)-chlor-4-methyl-1-pentyloxycarbonyl)phenyl]pyrimidin;
2,5-Bis-[4-(2(S)-cyano-4-methyl-1-pentyloxycarbonyl)phenyl]pyrimidin;
und die optischen Antipoden der genannten Verbindungen.

Beispiel 3

Die durch Verbindungen der Formel I in getilteten smektischen Phasen induzierte spontane Polarisation wurde anhand von Gemischen mit 4-Octyloxybenzoesäure-4-hexyloxyphenylester untersucht. 4-Octyloxybenzoesäure-4-hexyloxyphenylester (95 Gew.-%) wurde jeweils mit 5 Gew.-% einer Verbindung der Formel I dotiert. Die spontane Polarisation $P_S$ der Gemische wurde bei 40 ± 1 °C gemessen, und daraus der extrapolierte Wert $P_S^e$ der spontanen Polarisation für die betreffende Verbindung berechnet. Die nachstehend angegebenen Werte von $P_S$ und $P_S^e$ sind jeweils Absolutwerte.

4,4″-Di-[1(R),2(S),5(R)-menthyloxycarbonyl]-p-terphenyl, $P_S$ = 11 nC/cm², $P_S^e$ = 220 nC/cm²;
4,4″-Di-[1(S)-phenyl-1-äthoxycarbonyl]-p-terphenyl, $P_S$ = 14 nC/cm², $P_S^e$ = 280 nC/cm²;
4,4″-Di-[2(S)-methyl-1-butyloxycarbonyl]-p-terphenyl, $P_S$ = 0,85 nC/cm², $P_S^e$ = 17 nC/cm²;
4,4″-Di-[2(S)-chlor-1-propyloxycarbonyl]-p-terphenyl, $P_S$ = 0,51 nC/cm², $P_S^e$ = 10,2 nC/cm²;
4,4″-Di-[2(R)-cyano-1-propyloxycarbonyl]-p-terphenyl, $P_S$ = 5,53 nC/cm², $P_S^e$ = 111 nC/cm²;
4,4″-Di-[2(S)-chlor-1-pentyloxycarbonyl]-p-terphenyl, $P_S$ = 6,8 nC/cm², $P_S^e$ = 136 nC/cm²;
4,4″-Di-[2(R)-cyano-1-pentyloxycarbonyl]-p-terphenyl, $P_S$ = 20 nC/cm², $P_S^e$ = 400 nC/cm²;
4,4″-Di-[2(R)-chlor-4-methyl-1-pentyloxycarbonyl]-p-terphenyl, $P_S$ = 9 nC/cm², $P_S^e$ = 180 nC/cm²;
4,4″-Di-[2(S)-cyano-4-methyl-1-pentyloxycarbonyl]-p-terphenyl, $P_S$ = 20 nC/cm², $P_S^e$ = 400 nC/cm².

**Patentansprüche**

**1.** Optisch aktive Verbindungen der allgemeinen Formel

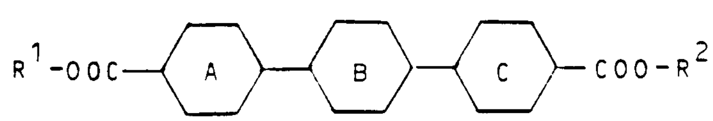

I

worin die Ringe A, B und C unabhängig voneinander unsubstituiertes oder mit Halogen, Cyano, Methyl und/oder Methoxy substituiertes 1,4-Phenylen bedeuten, in welchem gegebenenfalls 1 oder 2 CH-Gruppen durch Stickstoff ersetzt sind; $R^1$ das Radikal eines optisch aktiven Terpenalkohols nach Abspaltung der Hydroxygruppe oder eine Gruppe $-(CH_2)_m-C^*HX^1-R^3$ darstellt;
$R^2$ das Radikal eines optisch aktiven Terpenalkohols nach Abspaltung der Hydroxygruppe oder eine Gruppe $-(CH_2)_n-C^*HX^2-R^4$ darstellt; m und n unabhängig voneinander für die Zahl 0 oder 1 stehen; C* ein chirales Kohlenstoffatom bezeichnet; $X^1$ und $X^2$ unabhängig voneinander Fluor, Chlor, Cyano, Methyl oder Methoxy darstellen; $R^3$ und $R^4$ unabhängig voneinander Alkyl, Alkenyl, Phenyl, p-Alkylphenyl, p-Alkoxyphenyl oder p-Alkenyloxyphenyl mit jeweils höchstens 15 Kohlenstoffatomen bedeuten; mit der Massgabe, dass $R^3$ von $X^1$ verschieden ist und $R^4$ von $X^2$ verschieden ist; und mit der Massgabe, dass $R^1$ und $R^2$ nicht zugleich 2-Alkyl bezeichnen, wenn die Ringe A, B und C

zusammen p-Terphenyl darstellen.

**2.** Optisch aktive Verbindungen nach Anspruch 1, dadurch gekennzeichnet, dass die Ringe A, B und C unabhängig voneinander unsubstituiertes oder mit Halogen, Cyano, Methyl und/oder Methoxy substituiertes 1,4-Phenylen bedeuten oder einer der Ringe A, B und C auch Pyrimidin-2,5-diyl bedeutet.

**3.** Optisch aktive Verbindungen nach Anspruch 1 oder 2, gekennzeichnet durch die allgemeinen Formel

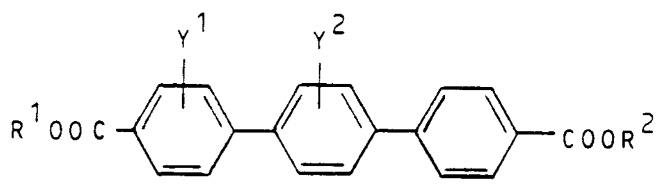

Id

worin $R^1$ und $R^2$ die in Anspruch 1 gegebenen Bedeutungen haben; und $Y^1$ und $Y^2$ unabhängig voneinander Wasserstoff, Halogen, Cyano, Methyl oder Methoxy bezeichnen; mit der Massgabe, dass $Y^1$ und/oder $Y^2$ von Wasserstoff verschieden ist, wenn $R^1$ und $R^2$ beide 2-Alkyl bedeuten.

**4.** Optisch aktive Verbindungen nach einem der Ansprüche 1 bis 3, dadurch gekennzeichnet, dass $R^1$ eine Gruppe $-(CH_2)_m-C^*HX^1-R^3$ darstellt, worin m für die Zahl 0 und $X^1$ für Cyano, Methyl oder Methoxy steht, oder m für die Zahl 1 und $X^1$ für Fluor, Chlor, Cyano, Methyl oder Methoxy steht.

**5.** Optisch aktive Verbindungen nach einem der Ansprüche 1 bis 4, dadurch gekennzeichnet, dass $R^2$ eine Gruppe $-(CH_2)_n-C^*HX^2-R^4$ darstellt, worin n für die Zahl 0 und $X^2$ für Cyano, Methyl oder Methoxy steht, oder n für die Zahl 1 und $X^2$ für Fluor, Chlor, Cyano, Methyl oder Methoxy steht.

**6.** Optisch aktive Verbindungen nach einem der Ansprüche 1 bis 3, dadurch gekennzeichnet, dass $R^1$ und/oder $R^2$ Menthyl bedeutet.

**7.** Optisch aktive Verbindungen nach einem der Ansprüche 1 bis 6, dadurch gekennzeichnet, dass $R^1$ und $R^2$ gleiche Bedeutunng haben.

**8.** Flüssigkristallines Gemisch mit mindestens 2 Komponenten, dadurch gekennzeichnet, dass mindestens eine Komponente eine optisch aktive Verbindung der in Anspruch 1 definierten Formel I ist.

**9.** Verwendung der optisch aktiven Verbindungen der in Anspruch 1 definierten Formel I für elektrooptische Zwecke.

## Claims

**1.** Optically active compounds of the general formula

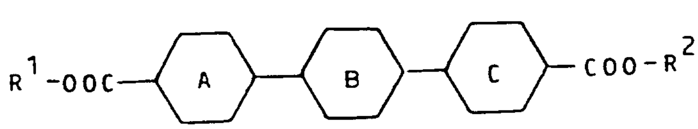

I

wherein rings A, B and C each independently signify unsubstituted or halogen-, cyano-, methyl- and/or methoxy-substituted 1,4-phenylene in which optionally 1 CH group or 2 CH groups is/are replaced by nitrogen; $R^1$ represents the radical of an optically active terpene alcohol after cleavage of the hydroxy group or a group $-(CH_2)_m-C^*HX^1-R^3$; $R^2$ represents the radical of an optically active terpene alcohol after cleavage of the hydroxy group or a group $-(CH_2)_n-C^*HX^2-R^4$; m and n each independently stand for the number 0 or 1; C* denotes a chiral carbon atom; $X^1$ and $X^2$ each independently represent fluorine, chlorine, cyano, methyl or methoxy; $R^3$ and $R^4$ each independently signify alkyl, alkenyl,

phenyl, p-alkylphenyl, p-alkoxyphenyl or p-alkenyloxyphenyl with in each case a maximum of 15 carbon atoms; with the proviso that $R^3$ is different from $X^1$ and $R^4$ is different from $X^2$; and with the proviso that $R^1$ and $R^2$ do not simultaneously denote 2-alkyl when rings A, B and C together represent p-terphenyl.

**2.** Optically active compounds according to claim 1, characterized in that rings A, B and C each independently signify unsubstituted or halogen-, cyano-, methyl- and/or methoxy-substituted 1,4-phenylene or one of rings A, B and C also signifies pyrimidine-2,5-diyl.

**3.** Optically active compounds according to claim 1 or 2, characterized by the general formula

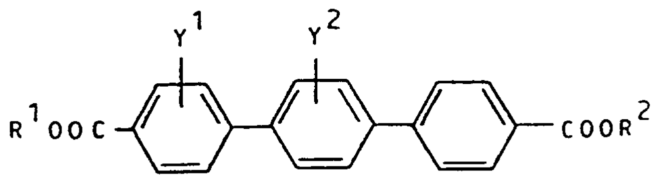

Id

wherein $R^1$ and $R^2$ have the significances given in claim 1; and $Y^1$ and $Y^2$ each independently denote hydrogen, halogen, cyano, methyl or methoxy: with the proviso that $Y^1$ and/or $Y^2$ is different from hydrogen when $R^1$ and $R^2$ both signify 2-alkyl.

**4.** Optically active compounds according to any one of claims 1 to 3, characterized in that $R^1$ represents a group $-CH_2)_m-C^*HX^1-R^3$ in which m stands for the number 0 and $X^1$ stands for cyano, methyl or methoxy or m stands for the number 1 and $X^1$ stands for fluorine, chlorine, cyano, methyl or methoxy.

**5.** Optically active compounds according to any one of claims 1 to 4, characterized in that $R^2$ represents a group $-(CH_2)_n-C^*HX^2-R^4$ in which n stands for the number 0 and $X^2$ stands for cyano, methyl or methoxy or n stands for the number 1 and $X^2$ stands for fluorine, chlorine, cyano, methyl or methoxy.

**6.** Optically active compounds according to any one of claims 1 to 3, characterized in that $R^1$ and/or $R^2$ signifies menthyl.

**7.** Optically active compounds according to any one of claims 1 to 6, characterized in that $R^1$ and $R^2$ have the same significance.

**8.** A liquid crystalline mixture having at least 2 components, characterized in that at least one component is an optically active compound of formula I defined in claim 1.

**9.** The use of the optically active compounds of formula I defined in claim 1 for electro-optical purposes.

**Revendications**

**1.** Composés possédant l'activité optique, répondant à la formule générale

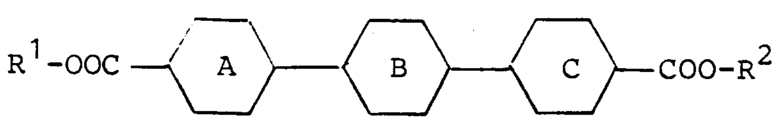

I

dans laquelle les cycles A, B et C sont, indépendamment les uns des autres, des cycles 1,4-phénylène non substitués ou substitués par des halogènes, des groupes cyano, méthyle et/ou méthoxy et dans lesquels le cas échéant, un ou deux groupes CH sont remplacés par l'azote; $R^1$ représente le radical d'un alcool terpénique possédant l'activité optique, après élimination du groupe hydroxy, ou un groupe $-(CH_2)_mC^*HX^1-R^3$; $R^2$ représente le radical d'un alcool terpénique possédant l'activité optique, après élimination du groupe hydroxy, ou un groupe $-(CH_2)_n-C^*HX^2-R^4$; m et n sont égaux chacun, indépendamment l'un de l'autre, à 0 ou 1; C* représente un atome de carbone chiral; $X^1$ et $X^2$ représentent chacun, indépendamment l'un de l'autre, le fluor, le chlore, un groupe cyano, méthyle ou méthoxy; $R^3$ et $R^4$ représentent chacun, indépendamment l'un de l'autre, un groupe alkyle, alcényle, phényle, p-alkylphényle, p-alcoxyphényle ou p-alcényloxyphényle contenant chacun au maximum 15 atomes de carbone;
sous réserve que $R^3$ soit différent de $X^1$ et $R^4$ différent de $X^2$ et sous réserve que $R^1$ et $R^2$ ne peuvent représenter tous deux des groupes 2-alkyle lorsque les cycles A, B et C forment ensemble un système cyclique p-terphényle.

**2.** Composés possédant l'activité optique selon revendication 1, caractérisés en ce que les cycles A, B et C sont chacun, indépendamment les uns des autres, des cycles 1,4-phénylène non substitués ou substitués par des halogènes, des groupes cyano, méthyle et/ou méthoxy, l'un des cycles A, B et C pouvant également consister en un cycle pyrimidine-2,5-diyle.

**3.** Composés possédant l'activité optique selon revendication 1 ou 2, caractérisés par la formule générale

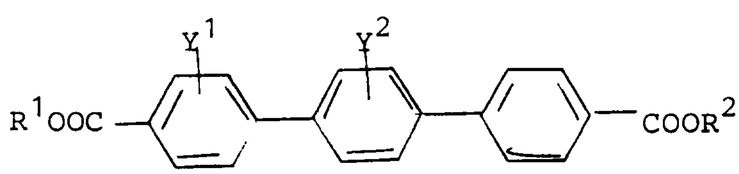

Id

dans laquelle $R^1$ et $R^2$ ont les significations indiquées dans la revendication 1 et $Y^1$ et $Y^2$ représentent chacun, indépendamment l'un de l'autre, l'hydrogène, un halogène, un groupe cyano, méthyle ou méthoxy; sous réserve que $Y^1$ et/ou $Y^2$ ont des significations autres que l'hydrogène lorsque $R^1$ et $R^2$ représentent tous deux des groupes 2-alkyle.

**4.** Composés possédant l'activité optique selon l'une des revendications 1 à 3, caractérisés en ce que $R^1$ représente un groupe $-(CH_2)_m-C^*HX^1-R^3$ dans lequel m est égal à 0 et $X^1$ représente un groupe cyano, méthyle ou méthoxy, ou bien m est égal à 1 et $X^1$ représente le fluor, le chlore, un groupe cyano, méthyle ou méthoxy.

**5.** Composés possédant l'activité optique selon l'une des revendications 1 à 4, caractérisés en ce que $R^2$ représente un groupe $-(CH_2)_n-C^*HX^2-R^4$ dans lequel n est égal à 0 et $Y^2$ représente un groupe cyano, méthyle ou méthoxy, ou bien n est égal à 1 et $X^2$ représente le fluor, le chlore, un groupe cyano, méthyle ou méthoxy.

**6.** Composés possédant l'activité optique selon l'une des revendications 1 à 3, caractérisés en ce que $R^1$ et/ou $R^2$ représentent des groupes menthyle.

**7.** Composés possédant l'activité optique selon l'une des revendications 1 à 6, caractérisés en ce que $R^1$ et $R^2$ ont la même signification.

**8.** Mélange à cristaux liquides à au moins deux composants, caractérisé en ce que l'un au moins des composants est un composé, possédant l'activité optique, de formule I de la revendication 1.

**9.** Utilisation des composés à activité optique de formule I de la revendication 1 dans des applications électro-optiques.